# EUROPÄISCHE PATENTSCHRIFT

(11) **EP 3 685 026 B1**
(45) Veröffentlichungstag und Bekanntmachung des Hinweises auf die Patenterteilung: **29.12.2021**
(21) Anmeldenummer: 18779578.6
(22) Anmeldetag: 18.09.2018
(51) Int. Cl.: F01N 3/28, F01N 5/02

(54) **KATALYSATOR ZUR BEHANDLUNG VON ABGASEN**
CATALYTIC CONVERTER FOR TREATING EXHAUST GASES
CATALYSEUR POUR TRAITER DES GAZ D'ÉCHAPPEMENT

(30) Priorität: 18.09.2017 DE 102017216469
(43) Veröffentlichungstag der Anmeldung: 29.07.2020
(73) Patentinhaber: Vitesco Technologies GmbH, 93055 Regensburg (DE)
(72) Erfinder: HIRTH, Peter, 51503 Rösrath (DE); STOCK, Holger, 53721 Siegburg (DE)
(86) Internationale Anmeldenummer: PCT/EP2018/075148
(87) Internationale Veröffentlichungsnummer: WO 2019/053279

(56) Entgegenhaltungen:
- DE-A1- 3 437 477
- FR-A1- 2 704 276
- US-A- 5 987 885

## Beschreibung

### Technisches Gebiet

Die Erfindung betrifft einen Katalysator zur Behandlung von Abgasen eines Verbrennungsmotors mit einem Gehäuse, welches von einem Abgas durchströmbar ist, mit einer Einströmseite und mit einer Ausströmseite, wobei in dem Gehäuse eine Mehrzahl von Strömungskanälen ausgebildet ist, die entlang einer Hauptdurchströmungsrichtung von der Einströmseite hin zur Ausströmseite durchströmbar sind.

### Stand der Technik

Die Temperierung von Rohrreaktoren, wie sie beispielsweise in chemischen Anlagen eingesetzt werden, erfolgt gewöhnlich über die Rohrwände des entsprechenden Reaktors. Der Durchmesser der zu verwendenden ist dadurch begrenzt, da sichergestellt werden muss, dass eine ausreichend große Wärmemenge aus dem Inneren hin zu Rohrwand transportiert werden kann oder von der Rohrwand in das strömende Medium transportiert werden kann. Daher muss eine Vielzahl von dünnen Rohren eingesetzt werden, wodurch die Herstellung der Reaktoren besonders aufwändig und teuer ist.

Bei Abgaskatalysatoren, wie sie beispielswiese zur Nachbehandlung von Abgasen eines Verbrennungsmotors in Automobilen eingesetzt werden, ist das Konzept einer Wärmezufuhr oder einer Wärmeabfuhr von oder nach außen bislang nur wenig genutzt. Einzig elektrisch beheizbare Abgaskatalysatoren sind bisher im Stand der Technik bekannt, um die Gastemperatur des durch den Katalysator strömenden Abgases zu erhöhen. Hierzu werden Metallstrukturen elektrisch unter Ausnutzung des ohmschen Widerstandes erhitzt, wodurch auch das strömende Fluid erhitzt wird.

Problematisch bei Abgaskatalysatoren in Automobilen ist insbesondere, dass die Strömung des Abgases im Katalysator überwiegend laminar ausgebildet ist, wodurch es nur zu einer sehr geringen Strömung senkrecht zur Hauptströmungsrichtung kommt, wodurch der Wärmetransport senkrecht zur Hauptdurchströmungsrichtung hin zu den Rohrwänden oder weg von den Rohrwänden nur in engen Grenzen möglich ist.

Die FR 2 704 276 A1 offenbart eine Vorrichtung zur Reinigung der Abgase einer Wärmekraftmaschine. Die Vorrichtung umfasst einen Katalysatorträger, der aus einem Stapel von Metallblechen gebildet ist, die mit mindestens einer katalytisch aktiven Schicht beschichtet sind. Durch den Katalysatorträger hindurch verlaufen ein Bündel von länglichen Elementen, durch welche der Katalysatorträger gehalten wird. Die länglichen Elemente sind durch U-förmige oder haarnadelförmige Rohre gebildet, die zwei parallele Schenkel aufweisen, die durch einen Krümmer miteinander verbunden sind. Wobei die Enden der Schenkel der Rohre jeweils mit einem Einlasssammler und einem Auslasssammler für eine Kühlflüssigkeit verbunden sind.

Die DE 34 37 477 A1 offenbart einen katalytischen Wärmetauscher zur Reinigung von Abgasen einer Verbrennungskraftmaschine. Der Wärmetauscher hat die Form eines Kreuzstromwärmetauschers. Die zu reinigenden Abgase werden durch eine Gruppe von mit einem Katalysator beschichteten Strömungskanälen geführt, während das flüssige Kühlmedium durch eine zweite Gruppe von quer zur ersten Gruppe verlaufenden Strömungskanälen geführt wird. Die getrennten Gruppen von Durchlässen sind im Wärmetauscher in abwechselnden Schichten angeordnet. Die Strömungskanäle für das fluide Wärmetauschermedium (Luft) können mit elektrischen Heizelementen versehen sein.

Nachteilig an den im Stand der Technik bekannten Vorrichtungen ist insbesondere, dass bezogen auf den zur Verfügung stehenden Bauraum keine ausreichend hohe Wärmezufuhr beziehungsweise Wärmeabfuhr möglich ist, um die bei stark exothermen Reaktionen entstehende Wärmemenge über die Rohrwände abzuleiten.

Darstellung der Erfindung, Aufgabe, Lösung, Vorteile

Daher ist es die Aufgabe der vorliegenden Erfindung einen Katalysator zu schaffen, welcher es ermöglicht auch bei stark exothermen Reaktionen eine ausreichend große Wärmemenge schnell abzuführen, um die strukturelle Integrität des Katalysators sicherzustellen. Gleichzeitig soll ein Katalysator mit einer möglichst einfachen und platzsparenden Bauform geschaffen werden.

Die Aufgabe hinsichtlich des Katalysators wird durch einen Katalysator mit den Merkmalen von Anspruch 1 gelöst.

Ein Ausführungsbeispiel der Erfindung betrifft einen Katalysator zur Behandlung von Abgasen eines Verbrennungsmotors mit einem Gehäuse, welches von einem Abgas durchströmbar ist, mit einer Einströmseite und mit einer Ausströmseite, wobei in dem Gehäuse eine Mehrzahl von Strömungskanälen ausgebildet ist, die entlang einer Hauptdurchströmungsrichtung von der Einströmseite hin zur Ausströmseite durchströmbar sind, wobei in dem Gehäuse zumindest eine Rohrleitung angeordnet ist, die mit einem von dem durch die Strömungskanäle strömbaren Abgas unabhängigen Fluid durchströmbar ist, wobei die Strömungskanäle in dem Katalysator durch einen Wabenkörper ausgebildet sind, der durch eine Lagenstapel aus gewellten und glatten Metalllagen gebildet ist, wobei die Rohrleitung innerhalb und zumindest teilweise entlang eines der Strömungskanäle verläuft.

Die Strömungskanäle in dem Katalysator sind durch einen Wabenkörper ausgebildet, der durch einen Lagenstapel aus gewellten und glatten Metalllagen gebildet ist. Die Metalllagen können dabei eine Vielzahl unterschiedlicher Wellprofile, wie sie aus dem Stand der Technik bekannt sind, aufweisen. Auch die glatten Metalllagen können unterschiedlich ausgestaltet sein und beispielsweise Öffnungen aufweisen, die ein Überströmen zwischen unterschiedlichen Strömungskanälen ermöglichen.

Unter anderem kann es vorteilhaft sein, wenn die Strömungskanäle derart ausgebildet sind, dass durch die Strömungskanäle strömendes Abgas zwischen mehreren Strömungskanälen umgelenkt wird, wodurch die Verteilung über den Querschnitt des Wabenkörpers verbessert werden kann und gleichzeitig auch der Wärmeübergang aufgrund der Ausbildung von zumindest lokalen turbulenten Strömungsabschnitten verbessert werden kann.

Durch die zumindest eine Rohrleitung kann ein Fluid gefördert werden, welches beispielsweise ein von dem Abgas abweichendes Temperaturniveau aufweist, wodurch ein Wärmeaustausch zwischen dem Abgas und dem strömenden Fluid erreicht werden kann. Erfindungsgemäß ist zumindest eine Rohrleitung vorgesehen. Auch eine Mehrzahl von Rohrleitungen, die über die Querschnittsfläche des Wabenkörpers verteilt sind, kann vorteilhaft vorgesehen werden, um einen möglichst gleichmäßigen Wärmetransport über den Querschnitt des Wabenkörpers hinweg sicherzustellen.

Besonders vorteilhaft ist es, wenn die Rohrleitung innerhalb und zumindest teilweise entlang eines der Strömungskanäle verläuft. Dies ist vorteilhaft, um die Rohrleitung insbesondere mit dem die Strömungskanäle ausbildenden Wabenkörper in wärmeleitenden Kontakt zu bringen. Auf diese Weise kann die Oberfläche, über welche der Wärmeaustausch primär stattfindet, stark vergrößert werden, da auch die jeweils um die Rohrleitung umliegenden Strömungskanäle beziehungsweise die sie begrenzenden Wandflächen die Wärmeübertragung unterstützen.

Auch ist es vorteilhaft, wenn die Rohrleitung mit einem Kühlfluid durchströmbar ist. Ein Kühlfluid ist besonders vorteilhaft, um Wärme von dem in dem Katalysator strömenden Abgas abzuführen. Dies kann beispielswiese bei stark exothermen Reaktionen vorteilhaft sein, um eine Überhitzung des Katalysators und insbesondere des Wabenkörpers zu verhindern.

Alternativ kann auch ein Wärmeeintrag in das Abgas über ein in den Rohrleitungen strömendes Fluid erzeugt werden. Dies ist besonders vorteilhaft, wenn innerhalb des Katalysators Prozesse ablaufen sollen, die eine hohe Temperatur beziehungsweise ein hohes Temperaturniveau im Abgas benötigen. Hierzu zählt beispielsweise der Prozess der Abgaskatalyse bei Gasmotoren.

Das Kühlfluid kann bevorzugt über einen eigenen Kühlmittelkreislauf gefördert und nach der Wärmeaufnahme wieder abgekühlt werden. Durch die gezielt steuerbare Wärmeabfuhr über das in den Rohrleitungen strömende Kühlfluid kann eine definierte Wärmeverteilung in dem Katalysator erzeugt werden. Hierzu ist es beispielsweise auch denkbar den Durchmesser der Rohrleitungen über die axiale Haupterstreckung des Katalysators zu variieren oder die Anzahl der Rohrleitungen zu variieren.

In einer vorteilhaften Ausgestaltung beispielsweise verändert sich die Anzahl der Rohrleitungen mit dem Abstand zur Einströmseite. Dadurch kann beispielsweise im direkt zur Einströmseite benachbarten Bereich eine höhere oder auch eine geringere Wärmeabfuhr erzeugt werden als im Bereich in der Nähe der Ausströmseite. Die Rohrleitungen können zu diesem Zweck beispielsweise in radialer Richtung von außen in den Wabenkörper eingeführt werden und mittels einer Umlenkung in die Richtung der Strömungskanäle umgelenkt werden.

Ein bevorzugtes Ausführungsbeispiel ist dadurch gekennzeichnet, dass der Katalysator einen Teilbereich aufweist, der sich von der Einströmseite aus hin zur Ausströmseite erstreckt, welcher keine Rohrleitung aufweist.

Dies ist vorteilhaft, um insbesondere im Bereich der Einströmseite eine möglichst hohe Temperatur im strömenden Abgas zu realisieren. Dadurch kann beispielsweise eine katalytische Umwandlung, welche besonders hohe Abgastemperaturen benötigt stattfinden. Insbesondere, wenn das Abgas vor dem Einströmen in den erfindungsgemäßen Katalysator durch eine Heizvorrichtung erwärmt wird um eine ausreichend hohe Temperatur zu haben, ist dies vorteilhaft. Der Katalysator kann dabei derart aufgebaut sein, dass die Reaktion mit dem Abgas, welche eine besonders hohe Temperatur erfordert, an der Einströmseite stattfindet und die Abkühlung durch einen Kontakt mit den Rohrleitungen in Richtung der Hauptdurchströmungsrichtung erst weiter hin zur Ausströmseite stattfindet.

Auch ist es zu bevorzugen, wenn die Rohrleitung mit der die Strömungskanäle ausbildenden Wabenstruktur durch Hartlöten verbunden ist. Hartlöten ist besonders vorteilhaft, um eine dauerhaft stabile Struktur zu erzeugen. Außerdem sind die Wärmeübertragungseigenschaften der Verbindungsbereiche beim Hartlöten besonders gut. Vorteilhafterweise sind die Rohrleitungen entlang ihrer gesamten Erstreckung entlang der Hauptdurchströmungsrichtung mit der Wabenstruktur verbunden.

Darüber hinaus ist es vorteilhaft, wenn die Rohrleitung einen runden Querschnitt aufweist und zwischen einer gewellten Metalllage und einer glatten Metalllage in einem der Wellenberge beziehungsweise in einem der Wellentäler der gewellten Metalllage angeordnet ist. Vorteilhafterweise weist die Rohrleitung einen an die Strömungskanäle angepassten Querschnitt auf, um sicherzustellen, dass die Kontaktfläche zwischen der Rohrleitung und dem Wabenkörper möglichst groß ist. Dies begünstigt den Wärmeübergang.

Auch ist es zweckmäßig, wenn das Verhältnis zwischen dem Innenumfang des die Rohrleitung aufnehmenden unbeschichteten Strömungskanals und dem Außenumfang der Rohrleitung zwischen 1 und 2, vorzugsweise zwischen 1,2 und 1,8 liegt.

Dies ist besonders vorteilhaft, um einen optimalen Wärmeübergang zwischen dem durch die Strömungskanäle strömenden Fluid und dem durch die Rohrleitungen strömenden Fluid zu erreichen. Untersuchungen haben dabei das vorgenannte Verhältnis als besonders optimal bestätigt, so dass ein besonders hoher Wirkungsgrad erreicht werden kann.

Weiterhin ist es vorteilhaft, wenn das Verhältnis der äußeren Oberfläche alle Rohrleitungen zur geometrischen Oberfläche der unbeschichteten die Rohrleitungen aufnehmenden und die Strömungskanäle ausbildenden Matrix ohne die Rohrleitungen zwischen 0,2 und 0,5, vorzugsweise zwischen 0,25 und 0,45 liegt.

Das Gesamtverhältnis der äußeren Oberfläche der Rohrleitungen zur geometrischen Oberfläche der unbeschichteten Matrix ist idealerweise in dem vorgenannten Bereich, da der Wärmeübergang zwischen den Fluiden in den Strömungskanälen und den Rohrleitungen besonders ideal stattfinden kann. Insbesondere kann durch das Einhalten des vorgenannten Verhältnisses ein besonders günstiger Wirkungsgrad für den Katalysator erreicht werden, wobei die Abgastemperatur über einen besonders weiten Betriebsbereich in einem optimalen Bereich zur Abgasnachbehandlung gehalten werden kann, wodurch die Funktion des Katalysators erheblich verbessert wird.

Mit Matrix ist das im Gehäuse des Katalysators angeordnete Gebilde aus einer Mehrzahl von Metalllagen bezeichnet, das sowohl die Strömungskanäle ausbildet, als auch die Rohrleitungen, sofern vorhanden, aufnimmt. In speziellen Ausführungsformen kann die Matrix auch das Gehäuse mit beinhalten.

Auch ist es zu bevorzugen, wenn sich an den Strömungskanälen eine Zone ausbildet, die durch eine erhöhte Strömungsgeschwindigkeit und/oder einen verbesserten Stoffübergangskoeffizienten in einem Teilbereich der Matrix gekennzeichnet ist.

Eine erhöhte Strömungsgeschwindigkeit in den Strömungskanälen ist vorteilhaft, um einen verbesserten Wärmeübergang zwischen dem in den Strömungskanälen strömenden und in der Rohrleitung strömenden Fluid zu ermöglichen. Auch ein verbesserter Stoffübergangskoeffizient ist vorteilhaft, um einen verbesserten Übergang zwischen den Phasen des Fluids, sofern vorhanden, zu erreichen.

Auch ist es vorteilhaft, wenn die Rohrleitungen im Bereich der Stirnfläche der Matrix im Bereich der Zone mit erhöhter Strömungsgeschwindigkeit positioniert sind.

Außerdem ist es zweckmäßig, wenn das Verhältnis der äußeren Oberfläche aller Rohrleitungen, die im Bereich der Zone mit erhöhter Strömungsgeschwindigkeit positioniert sind, zur geometrischen Oberfläche der unbeschichteten die Rohrleitungen aufnehmenden und die Strömungskanäle ausbildenden Matrix ohne die Rohrleitungen zwischen 0,05 und 0,1, vorzugsweise zwischen 0,07 und 0,08 liegt.

Weiterhin ist es vorteilhaft, wenn die Rohrleitungen eine strukturierte Innenwand aufweisen, wobei insbesondere von der Rohrwand hin zum Zentrum der Rohrleitung abragende Elemente die strukturierten Bereiche ausbilden. Eine strukturierte Innenwand der Rohrleitungen, beispielsweise durch abragende Elemente oder eine aufgeraute Oberfläche, sind vorteilhaft, um den Wärmeübergang zwischen den Rohrwänden und dem in dem Rohr strömenden Fluid zu verbessern.

Auch ist es zweckmäßig, wenn die die Strömungskanäle ausbildende Wabenstruktur aus spiralförmig aufgewickelten Metalllagen besteht, wobei eine Mehrzahl von horizontal und vertikal nebeneinander beziehungsweise übereinander gestapelten aufgewickelten Metalllagen in einem Gehäuse eingefasst ist und eine Mehrzahl von entlang der Hauptdurchströmungsrichtung durchströmbaren Strömungskanälen des Katalysators ausbildet.

Durch spiralförmig aufgewickelte Metalllagen können einzelne Strömungskanäle oder eine Mehrzahl von Strömungskanälen geschaffen werden. Mehrere dieser spiralförmig aufgewickelten Metalllagen können dann gestapelt werden und so den Wabenkörper bilden. Eine solche Bauform ist vorteilhaft, da die spiralförmig aufgewickelten Metalllagen einfach zu erzeugen sind.

Darüber hinaus ist es vorteilhaft, wenn im Zentrum einer spiralförmig aufgewickelten Metalllage eine Rohrleitung angeordnet ist und mit der aufgewickelten Metalllage wärmeleitend stoffschlüssig verbunden ist. Eine Anordnung der Rohrleitung im Zentrum der aufgewickelten Metalllage ist vorteilhaft, da durch den wärmeleitenden Kontakt zwischen der Rohrleitung und der spiralförmig aufgewickelten Metalllage die gesamte spiralförmig aufgewickelte Metalllage zur Wärmeübertragung genutzt werden kann. Die Wärmeübertragungsoberfläche wird somit gezielt um ein vielfaches vergrößert, wodurch mehr Wärme übertragen werden kann.

Weiterhin ist es zweckmäßig, wenn die aufgewickelten Metalllagen eine im Querschnitt rechteckförmige Spirale bilden. Eine rechteckförmige oder idealerweise quadratische Gestaltung der aufgewickelten Metalllage ist vorteilhaft, um eine ebenfalls rechteckige oder quadratische Rohrleitung im Zentrum anzuordnen. Auch können rechteckige Elemente besonders gut gestapelt werden und zu einem größeren Verbund, beispielsweise einem Wabenkörper, zusammengefügt werden.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine perspektivische Ansicht eines Lagenstapels, der aus mehreren gewellten Metalllagen besteht, zwischen denen metallische Glattlagen angeordnet sind,
- Fig. 2: eine Detailansicht des Lagenstapels aus Figur 1, wobei insbesondere eine in ein Wellental der gewellten Metalllage eingelegte Rohrleitung dargestellt ist,
- Fig. 3: eine perspektivische Ansicht eines Lagenstapels, wobei die Glattlagen eine abweichende Gestaltung aufweisen, wodurch insbesondere das Überströmen des Abgases zwischen zueinander benachbarten Strömungskanälen ermöglicht wird, und
- Fig. 4: eine Schnittansicht durch einen rechteckigen Katalysator, wobei die Strömungskanäle durch rechteckförmig aufgewickelte Metalllagen gebildet sind, die nebeneinander und übereinander gestapelt angeordnet sind.

### Bevorzugte Ausführung der Erfindung

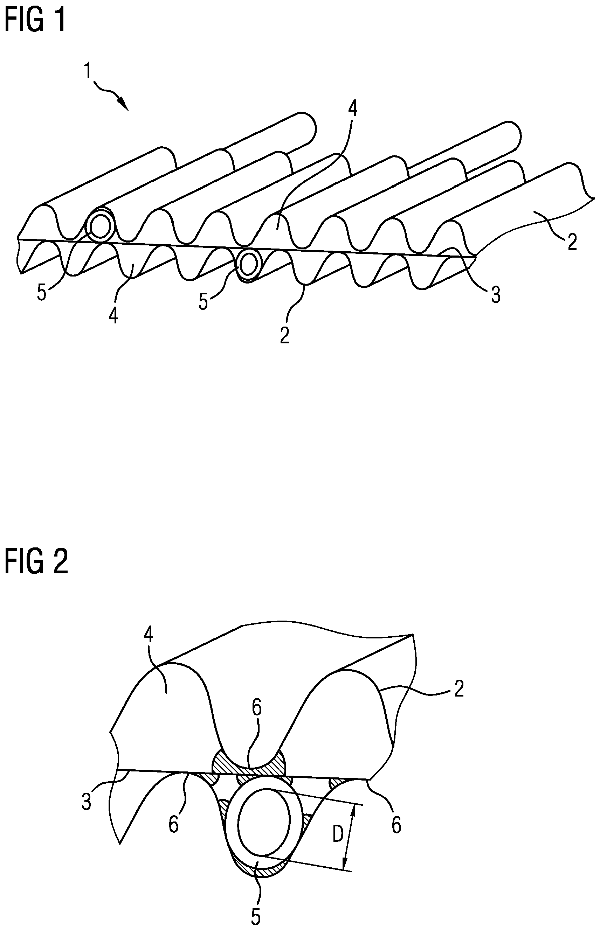

Die Figur 1 zeigt eine perspektivische Ansicht eines Lagenstapels 1, der aus mehreren gewellten Metalllagen 2 und glatten Metalllagen 3 gebildet ist. Der Aufbau entspricht dabei im Wesentlichen dem Aufbau eines gewöhnlichen Wabenkörpers, der aus einer Stapelung von mehreren Metalllagen gebildet ist.

Zwischen den gewellten Metalllagen 2 und den glatten Metalllagen 3 sind Strömungskanäle 4 ausgebildet, durch welche das Abgas strömen kann. Im Ausführungsbeispiel der Figur 1 ist in zwei der Strömungskanäle 4 jeweils eine Rohrleitung 5 eingelegt, durch welche ein zweites Fluid gefördert werden kann, beispielsweise zum Zwecke des Wärmeabtransports von dem Abgas hin zum Fluid oder zum Wärmetransport vom Fluid hin zum Abgas.

Die Rohrleitungen 5 verlaufen entlang der jeweiligen Strömungskanäle 4, wodurch die betroffenen Strömungskanäle 4 nicht mit Abgas durchströmt werden können. Der Wabenkörper weist somit eine um die Anzahl der Rohrleitungen 5 reduzierte Anzahl an Strömungskanälen 4 auf.

In der Abbildung der Figur 1 ragen die Rohrleitungen entlang ihrer axialen Haupterstreckung über den durch die gewellten Metalllagen 2 und die glatten Metalllagen 3 gebildeten Lagenstapel 1 hinaus. Dies dient zur Verdeutlichung des Aufbaus. In der praktischen Anwendung, werden die Rohrleitungen 5 bevorzugt maximal so lang sein, wie der Lagenstapel.

Figur 2 zeigt eine Detailansicht einer Rohrleitung 5 in einem der Strömungskanäle 4. Hier ist zu erkennen, dass die gewellten Metalllagen 2 und die glatten Metalllagen 3 miteinander stoffschlüssig durch das in den Kontaktbereichen 6 eingebrachte Lot verbunden sind. In der Figur 2 ist zu erkennen, dass um die Rohrleitung 5 noch Spalte beziehungsweise Freiräume zu den Metalllagen 2, 3 ausgebildet sind. Diese sind in einer praktischen Ausführung, wenn überhaupt vorhanden, regelmäßig derart klein, dass nur sehr wenig oder gar kein Abgas durch sie hindurch strömen kann.

Die Rohrleitung 5 weist einen Innendurchmesser D auf, der derart gewählt ist, dass die Rohrleitung 5 möglichst großflächig an den Metalllagen 2, 3 zu liegen kommt. Durch eine möglichst große Kontaktfläche kann auch die maximal übertragbare Wärmemenge vergrößert werden.

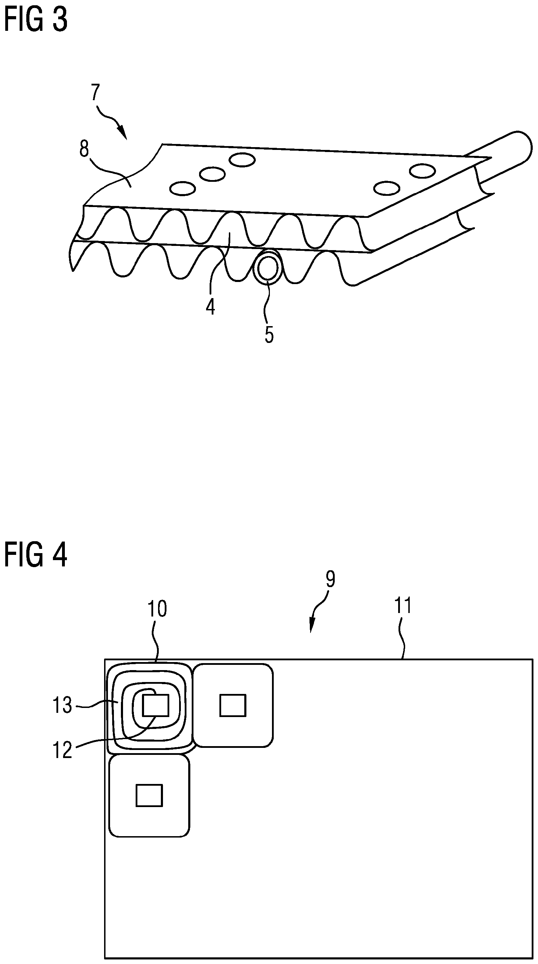

Die Figur 3 zeigt einen Lagenstapel 7, der abweichend zum Lagenstapel 1 der Figur 2 anders ausgestaltete Glattlagen 8 aufweist. Dies dient im Wesentlichen dazu zu verdeutlichen, dass der Lagenstapel unabhängig von der Einbringung der Rohrleitungen 5 auf vielfältige Weise ausgestaltet sein kann. Insbesondere können abweichende Metalllagen verwendet werden, die zu einer alternativen Ausgestaltung der Strömungskanäle führen.

Figur 4 zeigt ein alternatives Ausführungsbeispiel eines Lagenstapels 9, wobei eine Mehrzahl von spiralförmig aufgewickelten Metalllagen 10 innerhalb eines Gehäuses 11 angeordnet sind.

In der Mitte einer spiralförmig aufgewickelten Metalllage 10 ist eine Rohrleitung 12 angeordnet, die wärmeleitend mit der Metalllage 10 verbunden ist. Im Ausführungsbeispiel der Figur 4 ist die Metalllage 10 rechteckförmig aufgewickelt und die Rohrleitung 12 weist einen rechteckigen Querschnitt auf. Die Strömungskanäle für das Abgas sind zwischen den jeweils zueinander benachbart angeordneten Schichten der aufgewickelten Metalllage 10 ausgebildet.

Die Wahl von rechteckförmig aufgewickelten Metalllagen ist insbesondere für Katalysatoren mit einem rechteckigen Gehäuse vorteilhaft.

Die unterschiedlichen Merkmale der einzelnen Ausführungsbeispiele können auch untereinander kombiniert werden. Die Ausführungsbeispiele der Figuren 1 bis 4 weisen insbesondere keinen beschränkenden Charakter auf.

## Patentansprüche

1. Katalysator zur Behandlung von Abgasen eines Verbrennungsmotors mit einem Gehäuse, welches von einem Abgas durchströmbar ist, mit einer Einströmseite und mit einer Ausströmseite, wobei in dem Gehäuse eine Mehrzahl von Strömungskanälen (4, 13) ausgebildet ist, die entlang einer Hauptdurchströmungsrichtung von der Einströmseite hin zur Ausströmseite durchströmbar sind, wobei in dem Gehäuse zumindest eine Rohrleitung (5, 12) angeordnet ist, die mit einem von dem durch die Strömungskanäle (4, 13) strömbaren Abgas unabhängigen Fluid durchströmbar ist, **dadurch gekennzeichnet , dass** die Strömungskanäle (4, 13) in dem Katalysator durch einen Wabenkörper ausgebildet sind, der durch einen Lagenstapel aus gewellten und glatten Metalllagen gebildet ist, wobei die Rohrleitung (5, 12) innerhalb und zumindest teilweise entlang eines der Strömungskanäle (4, 13) verläuft.

2. Katalysator nach einem der vorhergehenden Ansprüche, **dadurch gekennzeichnet , dass** die Rohrleitung (5, 12) mit einem Kühlfluid durchströmbar ist.

3. Katalysator nach einem der vorhergehenden Ansprüche, **dadurch gekennzeichnet , dass** der Katalysator einen Teilbereich aufweist, der sich von der Einströmseite aus hin zur Ausströmseite erstreckt, welcher keine Rohrleitung (5, 12) aufweist.

4. Katalysator nach einem der vorhergehenden Ansprüche, **dadurch gekennzeichnet , dass** die Rohrleitung (5, 12) mit der die Strömungskanäle (4, 13) ausbildenden Wabenstruktur durch Hartlöten verbunden ist.

5. Katalysator nach einem der vorhergehenden Ansprüche, **dadurch gekennzeichnet , dass** die Rohrleitung (5) einen runden Querschnitt aufweist und zwischen einer gewellten Metalllage (2) und einer glatten Metalllage (3) in einem der Wellenberge beziehungsweise in einem der Wellentäler der gewellten Metalllage (2) angeordnet ist.

6. Katalysator nach Anspruch 5, **dadurch gekennzeich net** , **dass** das Verhältnis zwischen dem Innenumfang des die Rohrleitung (5) aufnehmenden unbeschichteten Strömungskanals und dem Außenumfang der Rohrleitung (5) zwischen 1 und 2, vorzugsweise zwischen 1,2 und 1,8 liegt.

7. Katalysator nach Anspruch 5, **dadurch gekennzeichnet , dass** das Verhältnis der äußeren Oberfläche alle Rohrleitungen zur geometrischen Oberfläche der unbeschichteten die Rohrleitungen aufnehmenden und die Strömungskanäle ausbildenden Matrix ohne die Rohrleitungen zwischen 0,2 und 0,5, vorzugsweise zwischen 0,25 und 0,45 liegt.

8. Katalysator nach Anspruch 5, **dadurch gekennzeichnet , dass** sich an den Strömungskanälen eine Zone ausbildet, die durch eine erhöhte Strömungsgeschwindigkeit und/oder einen verbesserten Stoffübergangskoeffizienten in einem Teilbereich der Matrix gekennzeichnet ist.

9. Katalysator nach Anspruch 8, **dadurch gekennzeichnet , dass** die Rohrleitungen im Bereich der Stirnfläche der Zone mit erhöhter Strömungsgeschwindigkeit positioniert sind.

10. Katalysator nach Anspruch 9, **dadurch gekennzeichnet , dass** das Verhältnis der äußeren Oberfläche aller Rohrleitungen, die im Bereich der Zone mit erhöhter Strömungsgeschwindigkeit positioniert sind, zur geometrischen Oberfläche der unbeschichteten die Rohrleitungen aufnehmenden und die Strömungskanäle ausbildenden Matrix ohne die Rohrleitungen zwischen 0,05 und 0,1, vorzugsweise zwischen 0,07 und 0,08 liegt.

11. Katalysator nach einem der vorhergehenden Ansprüche, **dadurch gekennzeichnet , dass** die Rohrleitungen (5, 12) eine strukturierte Innenwand aufweisen, wobei insbesondere von der Rohrwand hin zum Zentrum der Rohrleitung (5, 12) abragende Elemente die strukturierten Bereiche ausbilden.

12. Katalysator nach einem der vorhergehenden Ansprüche, **dadurch gekennzeichnet , dass** die die Strömungskanäle (13) ausbildende Wabenstruktur aus spiralförmig aufgewickelten Metalllagen (10) besteht, wobei eine Mehrzahl von horizontal und vertikal nebeneinander beziehungsweise übereinander gestapelten aufgewickelten Metalllagen (10) in einem Gehäuse (11) eingefasst ist und eine Mehrzahl von entlang der Hauptdurchströmungsrichtung durchströmbaren Strömungskanälen (13) des Katalysators ausbildet.

13. Katalysator nach Anspruch 12, **dadurch gekennzeichnet , dass** im Zentrum einer spiralförmig aufgewickelten Metalllage (10) eine Rohrleitung (12) angeordnet ist und mit der aufgewickelten Metalllage (10) wärmeleitend stoffschlüssig verbunden ist.

14. Katalysator nach Anspruch 12 oder 13, **dadurch gekennzeichnet , dass** die aufgewickelten Metalllagen (10) eine im Querschnitt rechteckförmige Spirale bilden.

## Claims

1. Catalytic converter for treating exhaust gases of an internal combustion engine, having a housing through which an exhaust gas can flow and which has an inflow side and an outflow side, wherein, in the housing, there is formed a plurality of flow channels (4, 13) which can be flowed through along a main throughflow direction from the inflow side to the outflow side, wherein, in the housing, there is arranged at least one pipeline (5, 12) which can be flowed through by a fluid which is independent of the exhaust gas that can be caused to flow through the flow channels (4, 13), **characterized in that** the flow channels (4, 13) in the catalytic converter are formed by a honeycomb body which is formed by a layer stack of corrugated and smooth metal layers, wherein the pipeline (5, 12) runs within and at least partially along one of the flow channels (4, 13) .

2. Catalytic converter according to any one of the preceding claims, **characterized in that** the pipeline (5, 12) can be flowed through by a cooling fluid.

3. Catalytic converter according to any one of the preceding claims, **characterized in that** the catalytic converter has a partial region which extends from the inflow side to the outflow side and which has no pipeline (5, 12).

4. Catalytic converter according to any one of the preceding claims, **characterized in that** the pipeline (5, 12) is connected by brazing to the honeycomb structure that forms the flow channels (4, 13).

5. Catalytic converter according to any one of the preceding claims, **characterized in that** the pipeline (5) has a round cross section and is arranged between a corrugated metal layer (2) and a smooth metal layer (3) in one of the wave peaks or in one of the wave troughs of the corrugated metal layer (2).

6. Catalytic converter according to Claim 5, **characterized in that** the ratio between the inner circumference of the uncoated flow channel that accommodates the pipeline (5) and the outer circumference of the pipeline (5) lies between 1 and 2, preferably between 1.2 and 1.8.

7. Catalytic converter according to Claim 5, **characterized in that** the ratio of the outer surface area of all pipelines to the geometric surface area of the uncoated matrix, which accommodates the pipelines and forms the flow channels, without the pipelines lies between 0.2 and 0.5, preferably between 0.25 and 0.45.

8. Catalytic converter according to Claim 5, **characterized in that,** at the flow channels, a zone forms which is **characterized by** an increased flow speed and/or an improved mass transfer coefficient in a subregion of the matrix.

9. Catalytic converter according to Claim 8, **characterized in that** the pipelines are positioned in the region of the end face of the zone with increased flow speed.

10. Catalytic converter according to Claim 9, **characterized in that** the ratio of the outer surface area of all pipelines positioned in the region of the zone with increased flow speed to the geometric surface area of the uncoated matrix, which accommodates the pipelines and forms the flow channels, without the pipelines lies between 0.05 and 0.1, preferably between 0.07 and 0.08.

11. Catalytic converter according to any one of the preceding claims, **characterized in that** the pipelines (5, 12) have a structured inner wall, wherein, in particular, elements which project from the pipe wall toward the centre of the pipeline (5, 12) form the structured regions.

12. Catalytic converter according to any one of the preceding claims, **characterized in that** the honeycomb structure which forms the flow channels (13) is composed of spirally wound metal layers (10), wherein a plurality of wound metal layers (10) stacked horizontally and vertically adjacent to one another and one above the other is enclosed in a housing (11) and forms a plurality of flow channels (13) of the catalytic converter, which flow channels can be flowed through along the main throughflow direction.

13. Catalytic converter according to Claim 12, **characterized in that** a pipeline (12) is arranged in the centre of a spirally wound metal layer (10) and is cohesively connected to the wound metal layer (10) in heat-conducting fashion.

14. Catalytic converter according to Claim 12 or 13, **characterized in that** the wound metal layers (10) form a spiral with a rectangular cross section.

## Revendications

1. Catalyseur pour le traitement de gaz d'échappement d'un moteur à combustion, muni d'un boîtier, qui peut être traversé par un gaz d'échappement, muni d'un côté d'entrée et muni d'un côté de sortie, une pluralité de canaux d'écoulement (4, 13) étant formés dans le boîtier, qui peuvent être traversés le long d'une direction de traversée principale depuis le côté d'entrée jusqu'au côté de sortie, au moins une canalisation (5, 12) étant agencée dans le boîtier, qui peut être traversée par un fluide indépendant du gaz d'échappement pouvant traverser les canaux d'écoulement (4, 13), **caractérisé en ce que** les canaux d'écoulement (4, 13) dans le catalyseur sont formés par un corps alvéolaire, qui est formé par un empilement de couches métalliques ondulées et lisses, la canalisation (5, 12) s'étendant à l'intérieur et au moins partiellement le long d'un des canaux d'écoulement (4, 13).

2. Catalyseur selon l'une quelconque des revendications précédentes, **caractérisé en ce que** la canalisation (5, 12) peut être traversée par un fluide de refroidissement.

3. Catalyseur selon l'une quelconque des revendications précédentes, **caractérisé en ce que** le catalyseur comprend une région partielle, qui s'étend depuis le côté d'entrée jusqu'au côté de sortie, qui ne comprend pas de canalisation (5, 12).

4. Catalyseur selon l'une quelconque des revendications précédentes, **caractérisé en ce que** la canalisation (5, 12) est reliée à la structure alvéolaire formant les canaux d'écoulement (4, 13) par brasage fort.

5. Catalyseur selon l'une quelconque des revendications précédentes, **caractérisé en ce que** la canalisation (5) présente une section transversale circulaire et est agencée entre une couche métallique ondulée (2) et une couche métallique lisse (3) dans une des crêtes d'ondulation ou dans un des creux d'ondulation de la couche métallique ondulée (2).

6. Catalyseur selon la revendication 5, **caractérisé en ce que** le rapport entre la circonférence intérieure du canal d'écoulement non revêtu recevant la canalisation (5) et la circonférence extérieure de la canalisation (5) est compris entre 1 et 2, de préférence entre 1,2 et 1,8.

7. Catalyseur selon la revendication 5, **caractérisé en ce que** le rapport entre la surface extérieure de toutes les canalisations et la surface géométrique de la matrice non revêtue recevant les canalisations et formant les canaux d'écoulement sans les canalisations est compris entre 0,2 et 0,5, de préférence entre 0,25 et 0,45.

8. Catalyseur selon la revendication 5, **caractérisé en ce qu'**une zone se forme sur les canaux d'écoulement, qui est **caractérisée par** une vitesse d'écoulement élevée et/ou un coefficient de transfert de matière amélioré dans une région partielle de la matrice.

9. Catalyseur selon la revendication 8, **caractérisé en ce que** les canalisations sont positionnées dans la région de la surface frontale de la zone à vitesse d'écoulement élevée.

10. Catalyseur selon la revendication 9, **caractérisé en ce que** le rapport entre la surface extérieure de toutes les canalisations, qui sont positionnées dans la région de la zone à vitesse d'écoulement élevée, et la surface géométrique de la matrice non revêtue recevant les canalisations et formant les canaux d'écoulement sans les canalisations est compris entre 0,05 et 0,1, de préférence entre 0,07 et 0,08.

11. Catalyseur selon l'une quelconque des revendications précédentes, **caractérisé en ce que** les canalisations (5, 12) présentent une paroi intérieure structurée, des éléments faisant saillie depuis la paroi tubulaire vers le centre de la canalisation (5, 12) formant notamment les régions structurées.

12. Catalyseur selon l'une quelconque des revendications précédentes, **caractérisé en ce que** la structure alvéolaire formant les canaux d'écoulement (13) est constituée de couches métalliques (10) enroulées en forme de spirale, une pluralité de couches métalliques (10) enroulées empilées horizontalement et verticalement les unes à côté des autres ou les unes au-dessus des autres étant encastrées dans un boîtier (11) et formant une pluralité de canaux d'écoulement (13) du catalyseur pouvant être traversés le long de la direction de traversée principale.

13. Catalyseur selon la revendication 12, **caractérisé en ce qu'une** canalisation (12) est agencée au centre d'une couche métallique (10) enroulée en forme de spirale et est reliée à la couche métallique enroulée (10) par accouplement de matière de manière à conduire la chaleur.

14. Catalyseur selon la revendication 12 ou 13, **caractérisé en ce que** les couches métalliques enroulées (10) forment une spirale de forme rectangulaire dans la section transversale.
